(19) Europäisches Patentamt
European Patent Office
Office européen des brevets

(11) **EP 3 431 447 B1**

(12) **EUROPEAN PATENT SPECIFICATION**

(45) Date of publication and mention
of the grant of the patent:
**04.03.2020 Bulletin 2020/10**

(51) Int Cl.:
*C03B 5/235* (2006.01)     *C03B 5/04* (2006.01)

(21) Application number: **17305980.9**

(22) Date of filing: **21.07.2017**

(54) **A METHOD OF MELTING RAW MATERIALS SUCH AS GLASS BY A CROSS-FIRED MELTING FURNACE**

VERFAHREN ZUM SCHMELZEN VON ROHMATERIALIEN WIE GLAS DURCH EINEN QUERFLAMMEN-SCHMELZOFEN

PROCÉDÉ DE FUSION DE MATIÈRES PREMIÈRES TELLES QUE LE VERRE PAR UN FOUR DE FUSION À BRÛLEURS TRANSVERSAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.01.2019 Bulletin 2019/04**

(73) Proprietor: **ENGIE**
**92400 Courbevoie (FR)**

(72) Inventors:
• **FRICKER, Neil**
**Solihull, West Midlands B93 8BT (GB)**
• **PONT, Richard Stanley**
**Pathhead, Lothian EH37 5SQ (GB)**
• **ALLIAT, Isabelle**
**75020 Paris (FR)**
• **LAPLACE, Thierry**
**93600 Aulnay sous Bois (FR)**
• **BELLIN-CROYAT, Thierry**
**95160 Montmorency (FR)**

(74) Representative: **Cabinet Beau de Loménie**
**158, rue de l'Université**
**75340 Paris Cedex 07 (FR)**

(56) References cited:
**US-A- 4 599 100     US-A- 5 823 769
US-A- 5 931 653     US-A1- 2013 011 805**

• **DATABASE WPI Week 199642 13 August 1996 (1996-08-13) Thomson Scientific, London, GB; AN 1996-421713 XP002777424, -& JP H08 208240 A (OSAKA GAS CO LTD) 13 August 1996 (1996-08-13)**

## Description

Background of the invention

Field of the Invention

The present invention relates to a combustion method applied to a method of melting raw materials, for example glass, in a cross-fired furnace and more specifically relates to a method aiming at reducing the formation of nitrogen oxides (NOx) in the flames used during the melting of the raw materials.

The invention further relates to a cross-fired melting furnace implementing such a method aiming at reducing the emission of NOx.

Description of the Related Art

Several types of melting furnaces for producing different types of glass or other materials are known, including cross-fired furnaces.

The following terms may be used in the present description. The following definitions are only given by way of example:

- Melting furnace, for example glass melting furnace: consists of a molten material bath covered by a combustion chamber in which fuel is combusted to generate the heat for melting the raw materials.
- Regenerative melting furnace, for example regenerative glass melting furnace: a furnace which is fitted with packed chambers connected to exhaust ports and inlet ports and which reverses firing direction at regular intervals so that the exhaust gases heat the packing and the oxidiser (for example combustion air) is heated by the packing alternately.
- Recuperative melting furnace, for example Recuperative Glass melting furnace: a furnace which fires continuously in one direction where the oxidiser is heated by a separate recuperative heat exchanger.
- Cross-fired furnace: a glass melting furnace where the inlet ports introducing oxidiser and the exhaust ports are located on opposing side walls. Firing takes place transversally to the glass flow.
- Back wall of a cross fired furnace: a transverse wall through which the raw materials are fed
- Front wall: the wall that opposes the back wall, usually the molten material in the bath is discharged below the front wall.
- Port: the channel used to introduce oxidiser into the melting chamber (so called 'inlet port') or to remove combustion products from the melting chamber (so called 'exhaust port').
- Burner: the device associated with the port or with ports that usually injects the fuel for melting of the raw materials. There may be more than one burner associated with a given port. Burners may be located in the following positions: under port- burners below the port, side of port-burners located in the side of the port, through port- burners located within the port.
- Auxiliary fuel: a fuel fed to the Auxiliary Injectors, which may be a proportion of the total fuel required to melt the raw materials which is fed to the Auxiliary Injector.
- Auxiliary fuel injector: a device to inject Auxiliary fuel into the melting chamber.
- Combustion Products: the gases resulting from the combustion of the fuel with oxidiser, typically having a proportion of oxygen less than 5% and more typically less than 2.5%.
- Re-circulating Combustion Products: the flow of combustion products that returns towards the inlet port in the space between the roof and the flame. In a Cross fired furnace this flow is in a vertical plane.
- Biofuel: a fuel derived from renewable biomass. Biofuels may be gaseous, liquid or solid.
- Oxidiser: the fluid used to combust the fuel, usually air.

In a cross-fired regenerative furnace, two sets of ports are arranged in opposite side walls and burners are operated alternately on one side and then the other for approximately 10-30 minutes per side. Oxidiser such as air is generally pre-heated by the combustion products produced in the preceding cycle (regenerative principle). During first periods of time, fuel and an oxidiser are supplied to only a first set of the two sets of ports with the oxidiser supplied via a regenerator, while the hot waste gases (or combustion products) are exhausted via the other set of ports and their associated regenerator. During alternate second periods of time, fuel and an oxidiser such as air are supplied to the other set of the two sets of ports, while the combustion products are exhausted via the first set of ports.

The ports are thus alternately operated in the function of an inlet port and an exhaust port. A heat exchanger, or regenerator is connected upstream from the supply opening of a port in the supply path of the oxidiser. A similar regenerator is found downstream of the exhaust port. On reversal of the firing direction, exhaust gas heat stored in the exhaust regenerator during the previous cycle is used to heat the incoming fresh oxidiser.

This process of heat recovery into the incoming oxidiser increases the thermal efficiency of the melting furnace and ensures the achievement of the high temperatures needed to melt the raw materials (circa 1500°C, 2700°F).

When the oxidiser is air, as is usually the case on industrial glass melting furnaces, Nitrogen Oxides (NOx), a regulated air pollutant, usually arise during the combustion of the fuel and oxidiser mixture. The nitrogen in the air combines with the oxygen in the air at the high temperatures found in glass melting furnace flames to form 'thermal NOx'. In the case of regenerative glass melting furnaces, concentrations of NOx in the exhaust gases are typically in the range of 750 to 2500 mg/Nm3 at 8% O2, the standard condition for comparing NOx emissions.

It is important to try to reduce the nitrogen oxide fraction in the exhaust gas to meet the limit of 500mg/Nm3 at 8% O2 set by current or imminent emissions regulations in many parts of the world. This requires 'as found' NOx emissions to be reduced by between 30% and 80%.

The option commonly deployed to reduce the NOx emissions from glass melting furnaces (or other types of furnaces) is post-treatment of the exhaust gas. However, such exhaust gas purification devices are costly and constitute additional equipment which requires additional space and high operating and maintenance cost. Typically, a selective catalytic reduction (SCR) plant to achieve up to 90% NOx reduction on a large cross-fired glass melting furnace has a capital cost of several million Euros and annual operating costs of hundreds of thousands of Euros. It requires the replacement of about 1/3 of the catalyst each year. It also requires the use of urea or ammonia (NH3) as a reducing agent, the latter a gas that is itself a regulated pollutant. A lower capital alternative is selective non-catalytic reduction (SNCR) carried out inside the exhaust regenerator. SNCR uses ammonia or urea to react with the NOx and decompose the NOx. It must be carried out at a very particular temperature between 870°C and 1090°C. Above this temperature the ammonia reacts to produce more NOx, while below it the ammonia leaves the regenerator unreacted to add to the emissions from the plant. On a reversing regenerative glass melting furnace, the right conditions for effective SNCR exist only for a small portion of the regenerative cycle at any given location in the regenerator. This renders SNCR quite ineffective.

Tsai (EP 0882488 and US5893940) introduces additional fuel and oxidiser into the exhaust gases in an attempt to stabilise their temperature entering the regenerative heat exchanger and thus to extend the portion of the furnace cycle for which SNCR is effective. The method works although is very difficult to control the temperature within the required range. Thus the effectiveness of Tsai's approach is limited and in addition it adds to the cost of the ammonia by increasing the fuel consumption and CO2 emissions of the furnace by several percentage points.

A more successful approach to cleaning up the exhaust gas after it leaves the melting chamber has been the addition of excess fuel either to the exhaust or within the melting chamber so that there is insufficient oxidiser available for complete combustion. In this circumstance, carbon monoxide (CO) and Hydrogen (H) is formed in the exhaust (reducing atmosphere), and these reduce NOx to nitrogen (N2) and carbon dioxide (CO2) and water (H2O) in the exhaust port and within the regenerators. Air must be introduced at the downstream end of the regenerator (sometimes called "over fired air") to burn the excess CO (another regulated pollutant) and to try to recover part of the heat lost in the additional fuel.

This method, called "reburning" technology, was originally proposed by Quirk (EP0599548 - the so-called 3R process) who used the non-firing burners in or near the exhaust ports to introduce the excess fuel. However, although it has the potential to achieve the required 80% reduction in NOx at a very low capital cost, this is at the price of an increase of between 5% and 15% in fuel consumption and CO2 emissions. The 3R approach also imposes chemical and thermal stress on the regenerators leading to a reduction in regenerator life. For these reasons, this approach has almost been abandoned by the glass industry.

In an attempt to improve this reburning fuel technology, Ichiraku (JP08208240) proposed a method of reducing NOx using after-burning in the regenerator. In this method excess fuel is injected into the furnace through injectors in the crown or in the exhaust port. NOx formed by the conventional burners enters the regenerators in a highly reducing atmosphere which results in decomposition of the NOx into nitrogen and carbon dioxide. A certain time is required for this "after burning" reaction which is usually complete part way through the regenerator. At this point air may be injected to burn the excess fuel at a relatively low temperature. Some of the heat generated is recovered by the regenerator and some leaves in the higher temperature gases from the regenerator. The technique is similar to the Quirk 3R process except that in 3R the excess gas is injected in the exhaust port neck. It suffers from similar drawbacks and it has not seen widespread application.

In summary, while all the exhaust gas clean up approaches discussed above are capable of achieving the required NOx reductions of up to 80%, they only achieve this at the price of high capital cost, or high running costs, or in some cases both. In addition, the Quirk and Ichiraku approaches lead to a large (circa 10%) increase in CO2 emissions.

An alternative approach is to reduce or avoid the formation of NOx in the melting chamber. Burner tuning, including the reduction of excess oxidiser (removing the available oxygen for the NOx forming reaction) and lengthening the flame (reducing peak flame temperature and hence the rate of NOx formation) is possible, but will typically yield not more than 10% to 20% reduction before high levels of CO appear in the exhaust. This or an associated loss of furnace output prevents their further use.

Moreau (US 6047565) proposes to create a "blanket" of inert gas between the oxidiser entering through the inlet port and the fuel entering through the burner, thus delaying combustion of the main fuel producing lower temperatures in the main flame and thus reducing NOx formation. The method applies only to underport firing arrangements where the fuel is introduced through one or more burners situated below the oxidiser ports and the stream of oxidiser flowing through them. Moreau proposes various methods of producing this "blanket". Usually the "Blanket" is formed in or below the combustion inlet port by introducing at low velocity a small (typically 5% and always less than 30%) quantity of the fuel between the main fuel jet and the oxidiser. The method can produce excessively long flames which do not complete combustion in the furnace and may result in undesirable reducing conditions at the glass surface. US 6047565 proposes methods to overcome these undesired effects by injection of high pressure jets of oxygen or air between the main fuel jets and the surface of the molten glass. This is quite a complex arrangement to manage. The total oxidiser supplied through the oxidiser port and the supplementary oxygen lances is held close to or below the amount needed for complete combustion. This fuel rich operation also contributes to reducing the NOx but the inventor gives no indication of the method's effectiveness in reducing NOx.

Nakamura (JP 05180409) reduces the formation of NOx by injecting part of the fuel through two injectors located on the same wall as the combustion air inlet port at a location adjacent to the port and directed in the same direction as the air and flame. Fuel from the two injectors is mixed with re-circulated waste gases which are low in oxygen and therefore burns slowly at a lower temperature resulting in lower NOx formation. In practical terms it is difficult to fit injectors at this location. Due to the proximity of the incoming oxidiser stream, there is insufficient distance available for the injector fuel to mix with the combustion products before encountering and mixing with the combustion air thus reducing the effectiveness of the Nakamura injection method.

Document Demarest (US 4 599 100) discloses a method for operating a cross-fired melting furnace using excess air firing. In this document, additional fuel is introduced through an additional burner to consume the excess air. The injection of additional fuel in this document is such that the reduction of excess air is on top of the flame so that the area between the flame and the glass remains oxidising and the exhaust from the furnace still contains some excess air. As the total amount of excess air is typically 20% the amount of additional fuel must be small. In order to achieve significant NOx reduction the total excess air must be reduced to very close to stoichiometric which is unlikely using the described technique. Demarest does not specify the amount of NOx reduction obtainable using this method.

Ward (WO 2008/074961 A2) discloses a combustion method for melting glass in which two fuels of the same nature or of different natures are fed into a melting chamber through burners and auxiliary injectors at two locations remote from each other for distributing the burner fuel and the auxiliary fuel in the melting chamber in order to reduce the NOx emissions, the oxidiser being supplied only at the location of the burner. The method takes advantage of the stream of recirculating combustion products that occupy a substantial fraction of the space above the incoming oxidiser and its burner flames. The design of the ports and the burners is such that these flames lie close to the surface of the molten glass, with the rest of the furnace filled with recirculating exhaust gases into which Ward injects part of the fuel. According to Ward, a portion (from 10% to 100%) of the fuel supplied through the burners is removed and introduced into the recirculating combustion products in such a way and at such a location so as to completely mix with and partially burn in the oxygen poor combustion products before they encounter and completely burn in the incoming oxidiser above the inlet port, a process labelled Auxiliary Injection.

The use of the recirculating combustion products of Ward can be improved.

## Objective of the invention

The present invention proposes and claims new auxiliary injection configurations to prevent the creation of NOx and furthermore to improve on Ward's (WO 2008/074961 A2) combustion process.

## Summary of the Invention

The technical problem to be solved is to provide a combustion method for a cross-fired melting furnace which remedies the above-mentioned problems or drawbacks and in particular diminishes the creation of NOx while maintaining the output and quality of molten material from the cross-fired melting furnace.

In particular, the invention aims at reducing the nitrogen oxide fraction of the exhaust gas at low cost and without introducing cumbersome additional equipment while maintaining or improving the melting process.

The invention is defined in the appended claims.

The invention provides a method of melting raw materials by a cross-fired melting furnace which has:

- a melting tank for receiving raw materials to be melted and for accommodating a melted materials bath;
- a melting chamber located above said melting tank and comprising a first side wall, a second side wall opposite said first side wall, a back wall located at an upstream area of said melting tank, a front wall located at a downstream area of said melting tank, and a roof;
- N first ports being provided in the first side wall in horizontally spaced locations between said back wall and front wall, each of said at least one series of N first ports being associated with a corresponding first burner of a series of N first burners;

- N second ports being located in the second side wall in horizontally spaced locations between said back wall and front wall, each of said N second ports being located opposite a first port to define N couples of first and second ports;

wherein re-circulating combustion products flow in a substantially vertical loop above a flame;
the method comprising:

introducing a first fraction X1 of fuel into said melting chamber via said first burners,
introducing a second fraction X2 of auxiliary fuel, with X2 + X1 being equal to 1, using at least one auxiliary fuel injector, the at least one auxiliary fuel injector being arranged in the cross-fired melting furnace in said roof or in the side wall not comprising burners introducing fuel so that the at least one auxiliary fuel injector introduces the second fraction X2 of auxiliary fuel,

in the direction of the flow of said re-circulating combustion products,
without additional oxidiser,
into said re-circulating combustion products, the auxiliary fuel injector being located at a point where said second fraction X2 of auxiliary fuel will mix with the recirculating combustion products, before reaching incoming oxidiser introduced by a port,
the velocities of the jets introducing the fraction X1 of fuel and the fraction X2 of auxiliary fuel being adapted so that the sum of their corresponding jet momenta is comprised between plus or minus 30% of a value corresponding to the jet momentum of the fuel when X2 equals zero (and X1 equals 1), and
the energy provided by the quantity of the sum of the first fraction of fuel X1 and the second fraction of fuel X2 being adapted to produce a given required energy for melting said materials without over-fuelling the furnace.

Over fuelling refers to an introduction of fuel which is in excess of the amount of fuel which can be burned by the available oxidiser. Over fuelling may occur in solutions of the prior art in which fuel is added into the melting chamber such as in Ichiraku.

Thus, the second fraction of auxiliary fuel X2 is introduced in the recirculating combustion products in a manner which enhances the flow of recirculating combustion products, ensuring an effective dilution of the auxiliary fuel to reduce NOx formation.

This results from the position and the direction of the jet of auxiliary fuel which introduces the fraction X2 of auxiliary fuel, and from the velocity of the auxiliary injection. It should be noted that this feature is not disclosed in document Ward which is silent on how the auxiliary fuel is introduced. As a matter of fact, in document Ward, the quantity of fuel introduced by a burner may be reduced so as to introduce another quantity of fuel through an auxiliary fuel injector. However, reducing the quantity of fuel introduced by a burner reduces the mass flow of the recirculating combustion products. The inventors of the present invention have discovered that by changing the direction and the velocity of the injection of the auxiliary fuel, and the velocity of the fuel leaving of the burners, it is possible to maintain the mass flow of the recirculating combustion products and thus to obtain a better NOx reduction effect without over fuelling the furnace.

The skilled person knows how to determine the required energy for melting materials efficiently for a given furnace and application. The sum of the momenta of the two fluids can be deduced from this energy (at plus or minus 30%). Furthermore, the fractions X1 and X2 may be chosen so as to obtain a desired level of NOx reduction.

Contrary to known solutions of the prior art which require modifications of the excess oxygen levels compared to a stoichiometric condition, the invention may operate within the existing excess oxygen levels for a furnace and for a specific melting application (with X2 being equal to zero).

It should be noted that the expression "X2 + X1 being equal to 1" is equivalent to the expression: the quantity (for example the mass) of fuel per unit time (or the corresponding energy per unit time) introduced in the melting chamber will be divided, or substantially divided, between the fuel introduced through the burner(s) and the auxiliary fuel.

Also, the value corresponding to the jet momentum of the fuel when X2 equals zero corresponds to the value when the fuel is only injected using the burner(s) to operate the furnace and to melt the same materials. Thus, this value corresponds to the normal functioning of the furnace for this application.

According to a particular embodiment, said at least one auxiliary fuel injector is located in said roof at the same distance from a first port and a second port opposite to the first port.

According to a particular embodiment, each of said second series of N second ports is associated with a corresponding second burner of a series of N second burners, and
said first ports and said second ports are alternately operable as an inlet port and as exhaust port, said first ports being inlet port when said second ports are exhaust ports and said first ports being exhaust ports when said second ports are inlet ports.

According to a particular embodiment, couples of first and second auxiliary fuel injectors are associated with each couple of oppositely arranged first and second ports, said first and second auxiliary fuel injectors being located in said roof or in said first and second side walls respectively in the vicinity of the first and second ports of the associated couple of oppositely arranged first and second ports, so that said first and second auxiliary fuel injectors are alternately operable to inject said second fraction X2 of auxiliary fuel, said first or second auxiliary fuel injectors being operable when the corresponding first or second ports located in the vicinity of said first or second auxiliary fuel injectors are exhaust ports.

According to a particular embodiment, said first and second burners and said at least one auxiliary fuel injector operate with the same fuel.

In this particular embodiment, a fraction of a fuel is routed to the burners and the remainder is routed to the at least one auxiliary fuel injector.

According to a particular embodiment, said first and second burners on the one hand and said at least one auxiliary fuel injectors on the other hand respectively operate with different fuels.

In this particular embodiment, two fuels are used corresponding to a quantity of energy which will be divided between the burners and the at least one auxiliary fuel injector.

According to a particular embodiment, said first and second burners on the one hand and said at least one auxiliary fuel injector on the other hand respectively operate with a fuel selected from the group consisting of natural gas, LPG, fuel oil, coke-oven gas, blast furnace gas, reforming gas, biofuel, methane, and hydrogen.

According to a particular embodiment, said at least one auxiliary fuel injector includes a device putting into rotation the injected auxiliary fuel to create a swirl effect.

According to a particular embodiment, said at least one auxiliary fuel injector includes a device to adjust or alter the jet momentum of the injected auxiliary fuel. For example, this may be done by the use of a pressurised jet of fuel, air or inert gas, or steam concentric with the Auxiliary fuel jet.

According to a particular embodiment, said second fraction X2 of auxiliary fuel represents between 10 and 100% of the sum of the first and second fractions X1 and X2 of fuel.

According to a particular embodiment, the method comprises introducing the second fraction of auxiliary fuel X2 so as to reinforce the mass flow of re-circulating combustion products.

According to a particular embodiment, the method comprises adjusting or turning off some of the burners so as to reinforce the mass flow of re-circulating combustion products.

According to a particular embodiment, the velocity of the jet for introducing the second fraction X2 of auxiliary fuel is comprised between 10 and 70 m/s.

According to a particular embodiment, the first auxiliary injectors are located at a distance less than one half and greater than one quarter of the width of the melting chamber from the side wall which is the closest to the first auxiliary injector, and the second auxiliary injectors are located a quarter of the width of the melting chamber from the side wall which is the closest to the second auxiliary injector (i.e. the side wall opposite the side wall which is the closest to the first auxiliary injector).

The invention also provides a cross-fired melting furnace comprising:

- a melting tank for receiving raw materials to be melted and for accommodating a melted materials bath;
- a melting chamber located above said melting tank and comprising a first side wall, a second side wall opposite said first side wall, a back wall located at an upstream area of said melting tank, a front wall located at a downstream area of said melting tank, and a roof;
- N first ports being provided in the first side wall in horizontally spaced locations between said back wall and front wall, each of said at least one series of N first ports being associated with a corresponding first burner of a series of N first burners introducing a first fraction X1 of fuel into said melting chamber via said first burners, whereas re-circulating combustion products flow in a substantially vertical loop above a flame;
- N second ports being located in the second side wall in horizontally spaced locations between said back wall and front wall, each of said N second ports being located opposite a first port to define N couples of first and second ports;
- at least one auxiliary fuel injector arranged in the cross-fired melting furnace in said roof or in the side wall not comprising burners introducing fuel,
- a module for controlling the at least one auxiliary fuel injector to introduce a second fraction X2 of auxiliary fuel, with X2 + X1 being equal to 1,

  in the direction of the flow of said re-circulating combustion products,
  without additional oxidiser,
  into said re-circulating combustion products, the auxiliary fuel injector being located at a point where said second fraction X2 of auxiliary fuel will mix with the recirculating combustion products, before reaching incoming oxidiser introduced by a port,
  the velocities of the jets introducing the fraction X1 of fuel and the fraction X2 of auxiliary fuel being adapted so that the sum of their corresponding jet momenta is comprised between plus or minus 30% of a value corresponding to the jet momentum of the fuel when X2 equals zero (and X1 equals 1), and
  the energy provided by the quantity of the sum of the first fraction of fuel X1 and the second fraction of fuel X2 being adapted to produce a given required energy for melting said materials without over-fuelling the furnace.

The above defined cross-fired melting furnace may be able to perform all the embodiments of the method as defined above.

According to a particular embodiment, said at least one auxiliary fuel injector is located in said roof at the same distance from a first port and a second port opposite to the first port.

According to a particular embodiment, each of said second series of N second ports is associated with a corresponding second burner of a series of N second burners, and

said first ports and said second ports are alternately operable as an inlet port and as exhaust port, said first ports being inlet port when said second ports are exhaust ports and said first ports being exhaust ports when said second ports are inlet ports.

According to a particular embodiment, couples of first and second auxiliary fuel injectors are associated with each couple of oppositely arranged first and second ports, said first and second auxiliary fuel injectors being located in said roof or in said first and second side walls respectively in the vicinity of the first and second ports of the associated couple of oppositely arranged first and second ports, so that said first and second auxiliary fuel injectors are alternately operable to inject said second fraction X2 of auxiliary fuel, said first or second auxiliary fuel injectors being operable when the corresponding first or second ports located in the vicinity of said first or second auxiliary fuel injectors are exhaust ports.

According to a particular embodiment, said first and second burners and said at least one auxiliary fuel injector operate with the same fuel.

According to a particular embodiment, said first and second burners on the one hand and said at least one auxiliary fuel injectors on the other hand respectively operate with different fuels.

According to a particular embodiment, said first and second burners on the one hand and said at least one auxiliary fuel injector on the other hand respectively operate with a fuel selected from the group consisting of natural gas, LPG, fuel oil, coke-oven gas, blast furnace gas, reforming gas, biofuel, methane, and hydrogen.

According to a particular embodiment, said at least one auxiliary fuel injector includes a device putting into rotation the injected auxiliary fuel to create a swirl effect.

According to a particular embodiment, said at least one auxiliary fuel injector includes a device to adjust or alter the jet momentum of the injected auxiliary fuel.

According to a particular embodiment, said second fraction X2 of auxiliary fuel represents between 10 and 100% of the sum of the first and second fractions X1 and X2 of fuel.

According to a particular embodiment, said module is configured for introducing the second fraction of auxiliary fuel X2 so as to reinforce the mass flow of recirculating combustion products.

According to a particular embodiment, said module is configured for adjusting or turning off some of the burners so as to reinforce the mass flow of re-circulating combustion products.

According to a particular embodiment, the velocity of the jet for introducing the second fraction X2 of auxiliary fuel is comprised between 10 and 70 m/s.

According to a particular embodiment, the first auxiliary injectors are located at a distance less than one half and greater than one quarter of the width of the melting chamber from the side wall which is the closest to the first auxiliary injector, and the second auxiliary injectors are located a quarter of the width of the melting chamber from the side wall which is the closest to the second auxiliary injector.

Other characteristics and advantages of the invention appear from the following description of particular embodiments, given as examples and with reference to the accompanying drawings.

Brief description of the drawings

Fig. 1 is a longitudinal horizontal sectional view of a cross-fired melting furnace according to the invention;
Fig. 2 is a perspective view of a cross-fired melting furnace according to the invention, a portion of the furnace casing being removed;
Fig. 3 is a longitudinal horizontal sectional view which is analogous to figure 1, but relates to a variant embodiment of the cross-fired melting furnace of figure 2; and
Fig. 4 is a transversal vertical sectional view along line IV-IV of figure 3.

DESCRIPTION OF THE PREFERRED EMBODIMENTS

The present invention will be described in connection with preferred embodiments which are given by way of examples. In the following examples, glass is the material to be melted by the furnace. However, the invention is also directed to the melting of other types of materials.

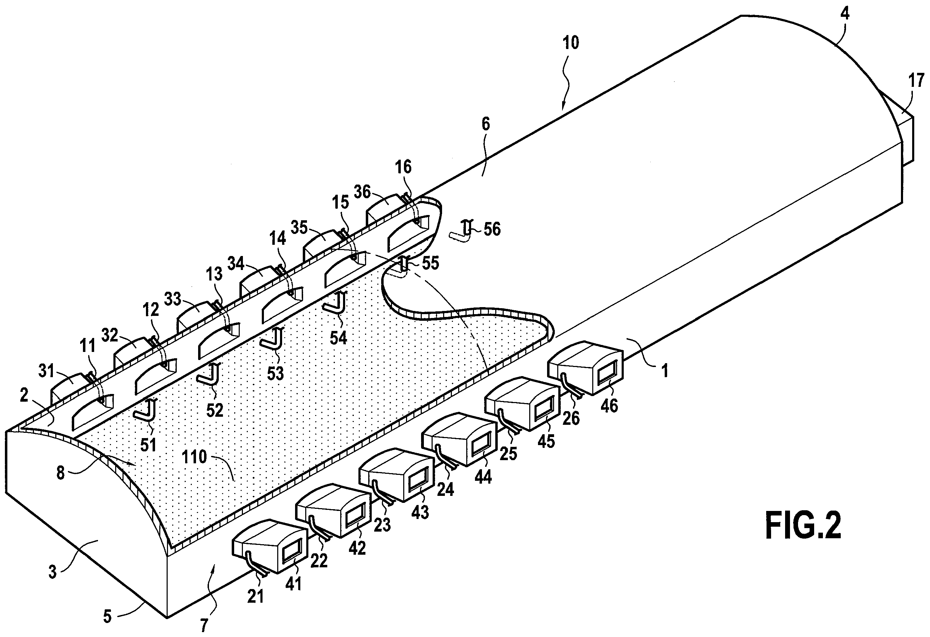

A typical arrangement of an embodiment of the invention is illustrated in Fig. 2, which schematically shows a melting furnace 10, of the type known as cross-fired melting furnace, for melting glass. The present invention is however not limited to the melting of glass and can be adapted on furnaces for melting other types of raw materials.

As shown in Fig. 2, the cross-fired melting furnace 10 comprises a melting tank 7 receiving through inlets (not shown), which are located in an upstream area of the melting tank 7, glass to be melted. The melting tank 7 having a bottom 5 accommodates a melted glass bath 110 and outputs the melted glass bath 110 through an outlet 17, which is located in a downstream area of the melting tank 7 in a front wall thereof.

A melting chamber 8 is located above the melting tank 7 and comprises a first side wall 2, a second side wall 1, a back wall 3 located at the upstream area of the melting tank 7, a front wall 4 located at the downstream area of the melting tank 7, and a roof 6.

A first set of horizontally aligned N first ports 31 to 36 are provided in the side wall 2 of the melting chamber 8 whereas a second set of horizontally aligned N second ports 41 to 46 are provided in the side wall 1 of the melting chamber 8. The second ports 41 to 46 are transversely aligned with the first ports 31 to 36, thus defining a set of N couples of first and second ports 31, 41,..., 36, 46.

N is an integer which may be preferably comprised between 1 and 8. In the examples shown in the drawings, N=6.

The first and second ports 31 to 36 and 41 to 46 are associated with first and second burners 11 to 16 and 21 to 26 respectively for injecting a first fuel into the melting chamber 8. The first and second ports 31 to 36 and 41 to 46 are alternately operable as inlet ports for introducing oxidiser (for example air) in the chamber and as exhaust ports for combustion products. The first ports 31 to 36 are inlet ports when the second ports 41 to 46 are exhaust ports and the first ports 31 to 36 are exhaust ports when the second ports 41 to 46 are inlet ports.

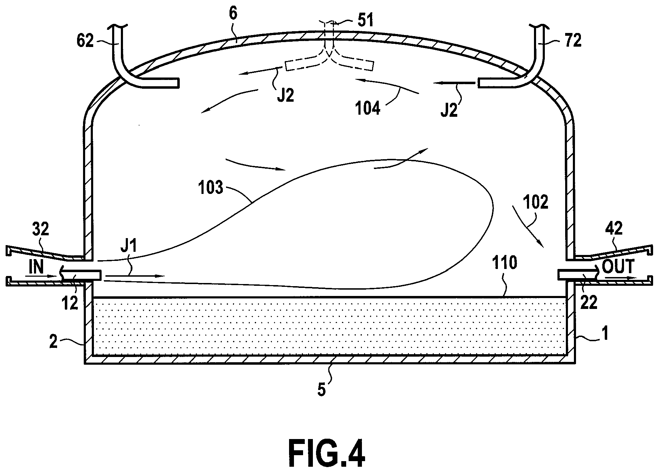

As schematically shown in figure 4, a heating burner flame 103, created when the first ports 31 to 36 are operated as inlet ports introducing oxidiser (for example air) and a first fuel is ejected through the first burners 11 to 16, has an elongated shape over the melting bath 110 and produces combustion products 102 which exit the chamber through second ports 41 to 46. A portion of the combustion products re-circulate in a substantially vertical loop of re-circulating combustion products 104 shown on figure 4.

By way of example, the incoming oxidiser exiting port 32 on figure 4 may have a quantity of oxygen of 21%, while the combustion products 102 and the re-circulating combustion products have a quantity of oxygen of 2%.

Similarly during alternate periods of time, the cycle is reversed: the first fuel is injected through burners 21 to 26 instead of burners 11 to 16, the oxidiser enters through the second ports 41 to 46 and the combustion products are finally exhausted through the first ports 31 to 36, the burners 11 to 16 being inactive. Re-circulated combustion products also recirculate in a substantially vertical loop above the flame having a reversed orientation.

The first and second ports 31 to 36 and 41 to 46 and the associated first and second burners 11 to 16 and 21 to 26 are thus alternately and repeatedly used as burners to mix first fuel with an oxidiser (usually air or oxygen). The changeover between the first and second sets of N first and second ports 31 to 36 and 41 to 46 and correspondingly the first and second sets of N first and second burners 11 to 16 and 21 to 26 occurs cyclically, with a cycle time being e.g. between 10 and 30 minutes, more specifically between 20 and 30 minutes. A first fraction X1 of fuel is injected into the melting chamber 8 via the alternately operated first and second burners 11 to 16 and 21 to 26. On a melting furnace not equipped with auxiliary fuel injectors of the present invention, X1 equals 1.

Advantageously, first and second regenerative heat exchangers (not shown) are operatively associated with the first and second ports 31 to 36 and 41 to 46. The ambient combustion air is pre-heated in a first regenerative heat exchanger reheated by hot combustion products of a preceding cycle. The pre-heated oxidiser (air) is then directed towards the first ports 31 to 36 of the first burners 11 to 16. The resulting combustion products are then directed towards a second regenerative heat exchanger (not shown) in order to re-heat it and pre-heat oxidiser to be applied through the second ports 41 to 46 of the second burners 21 to 26 during the next cycle.

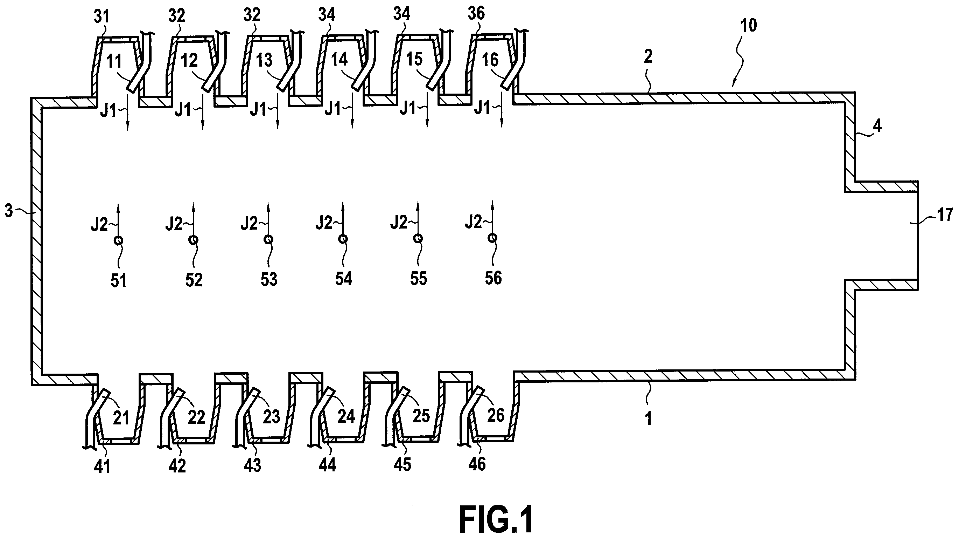

During a cycle in which the first burners are operated to introduce fuel, the first burners introduce a first fraction X1 of fuel into the melting chamber. The jets J1 of the introduction of fuel is represented on figures 1, 3 and 4. A module may control the jet J1.

According to an embodiment, auxiliary fuel injectors 51 to 56 are arranged in the cross-fired melting furnace 10, in the roof 6, for each couple of oppositely arranged first and second ports 31, 41;...; 36, 46.

The auxiliary fuel injectors may be arranged along a centre line of a couple of ports.

The auxiliary fuel injectors 51 to 56 are arranged so that they inject, or introduce, in the combustion chamber 8, a second fraction X2 of auxiliary fuel, with X2 + X1 being equal to 1:

in the direction of the flow of said re-circulating combustion products 104,
without additional oxidiser,
into said re-circulating combustion products , the auxiliary fuel injector being located at a point where said second fraction X2 of auxiliary fuel will mix with the recirculating combustion products, before reaching incoming oxidiser introduced by a port,
the velocities of the jets introducing the fraction X1 of fuel and the fraction X2 of auxiliary fuel being adapted so that the sum of their corresponding jet momenta is comprised between plus or minus 30% of a value corresponding to the jet momentum of the fuel when X2 equals zero (and X1 equals 1), and
the energy provided by the quantity of the sum of the first fraction of fuel X1 and the second fraction of fuel X2 being adapted to produce a given required energy for melting said materials without over-fuelling the furnace.

The jets J2 of the introduction of auxiliary fuel is represented on figures 1, 3 and 4. As can be seen on figure 4, the jet J2 is directed towards the corresponding port introducing oxidiser in the chamber. A module may control the jet J2.

Among 100% of the first and second fuels (quantity X) injected into the melting chamber 8 through the first and second burners 11 to 16, 21 to 26 and the additional fuel injectors, the fraction X2 of fuel jet emitted by the additional fuel injectors is preferably from 10% to 100% of the sum X.

The fuel injected through the first and second burners 11 to 16, 21 to 26 and the auxiliary fuel injectors may be selected from the group consisting of natural gas, LPG, fuel oil, coke-oven gas, blast furnace gas, reforming gas, biofuel, methane, and hydrogen.

The above mentioned recirculation of combustion products extends in a substantially vertical loop above the flame on a length (measured from the side wall being on the firing side) which has to be known so as to find the optimum location for the auxiliary fuel injectors. Also, the parameters of the injection and the fraction X2 of auxiliary fuel have to be determined in a manner such that the recirculation of combustion products is maintained. The size and strength of the recirculation can be calculated for example using the following equations derived by Thring (mentioned above), Craya (Craya A and Curtet R, 'On the spreading of a confined jet', Comptes-rendus de l'Academie des Sciences, Paris, 241, 1955) and others:

$$x = 4,5 \times h \qquad (1)$$

$$\frac{qr}{Q} = 0,43(\sqrt{m} - 1,65) \qquad (2)$$

$$m = \frac{G0}{Ginf} + \frac{Ga}{2Ginf} - 0,5 \qquad (3)$$

In which:

x is the distance from the side wall (firing side) to the point where there is no longer recirculation in the furnace,

h is the hydraulic height of the space between the glass surface, the furnace front and back walls and the furnace roof,

qr is the mass of combustion products recirculating per unit time and per port,

Q is the total mass of fuel and oxidiser entering the furnace per unit time and per port,

GO is the momentum of the incoming fuel jet(s) (mass flow rate multiplied by velocity), per port,

Ga is the momentum of the incoming oxidiser (mass flow rate multiplied by velocity), per port,

Ginf is the momentum of the outgoing hot exhaust gases (their mass flow rate multiplied by their mean velocity when they fill the furnace chamber), per port, and

m is a dimensionless number (Craya Curtet number) that relates to the relative jet momenta of the incoming fuel and oxidiser flows, and the outgoing combustion products.

The height of the furnace is generally determined to be sufficient to allow significant recirculation of combustion products. As far as the mass flow rate of recirculating combustion products is concerned, typical values for natural gas as fuel and for air as oxidiser together with typical air and gas velocities, when applied to equation (2), suggest that the mass of exhaust gases recirculating in a substantially vertical loop below the roof and above the flame is approximately equal to the incoming mass flow of fuel and oxidiser. This confirms that there is sufficient recirculation to carry up to 100% of the fuel flow entering the furnace (about 1/20th of the total mass flow entering the furnace) without affecting the furnace flow pattern and furnace operation.

However, as fuel is removed from the burners to supply the Auxiliary fuel injectors (for example because the second fraction X2 is introduced, the first fraction X1 has to be reduced), equation (2) indicates that the recirculation rate will eventually fall to values that are too low to carry the auxiliary fuel and maintain the furnace flow patterns, if the injectors are not in the above defined direction and if they do not inject with the above mentioned velocity.

According to a first embodiment which is illustrated in figures 1 and 2 and also in dotted lines in figure 4, an auxiliary fuel injectors 51 to 56 associated with a couple of oppositely arranged first and second ports 31, 41; ...; 36, 46 comprises a single fuel injector located in the roof 6 substantially at the same distance from the first and second ports of the associated couple of oppositely arranged first and second ports 31, 41; ...; 36, 46.

The auxiliary fuel injectors 51 to 56 may comprise a swirl chamber to spread the fuel in the re-circulation loop of combustion products.

For improved effectiveness, for example in multi-port cross-fired furnaces and hence to improve the stability of the re-circulating flows, the auxiliary fuel injectors may direct a higher momentum jet of auxiliary fuel in the direction of the recirculated combustion products 104 to maintain and enhance their recirculation and mass flow. This will also allow the use of auxiliary injectors in cross-fired melting furnaces suffering from exhaust port blockages as the years of operation accumulate.

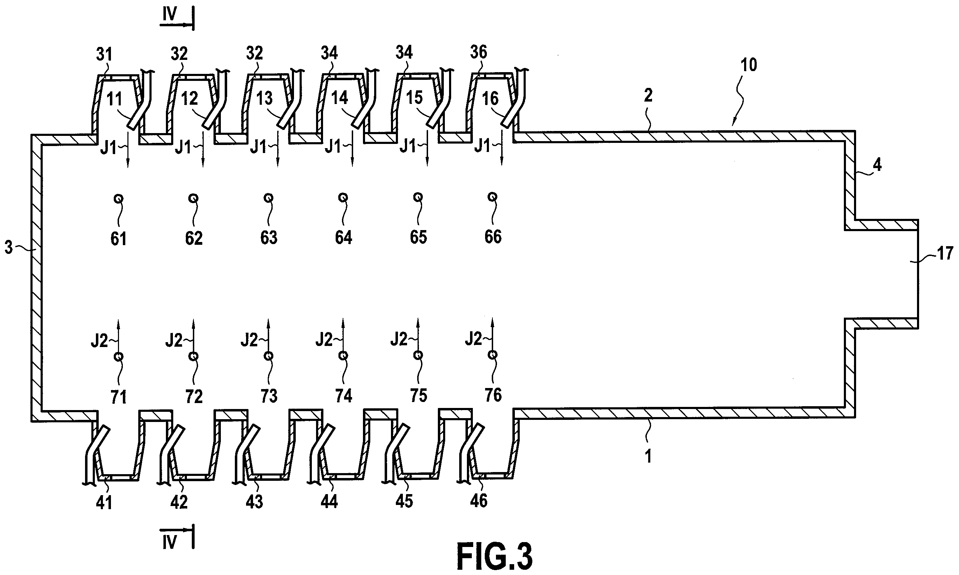

According to a second embodiment which is illustrated in figure 3, and also in figure 4 (in solid lines), the auxiliary fuel injectors comprise first and second fuel injectors 61, 71; ...; 66, 76 which are associated with each couple of oppositely arranged first and second ports 31, 41; ...; 33, 43. The first and second auxiliary fuel injectors 61, 71; ...; 66, 76 are located in the roof 6.

The first and second auxiliary fuel injectors 61, 71; ...; 66, 76 are alternately operable to inject the second fraction X2 of auxiliary fuel in the direction of the flow of said re-circulating combustion products 104 and without additional oxidiser. Because the direction of the flow of the re-circulating combustion products will reverse when the firing direction reverses, the first and second auxiliary fuel injectors 61, 71; ...; 66, 76 are operable when the corresponding first or second ports (31, 41; ...; 36, 46) located in the vicinity of said first or second auxiliary fuel injectors (61, 71; ...; 66, 76) are exhaust ports.

It should be noted that in the various embodiments, the velocity of the jet for introducing the second fraction X2 of auxiliary fuel may be comprised between 10 and 70 m/s.

According to a variant embodiment, the auxiliary fuel injectors 51 to 56 or 61 to 66 and 71 to 76 each include a device putting into rotation the injected auxiliary fuel to create a swirl effect. This may increase the mixing of fuel with the re-circulating combustion products in the melting chamber 8.

According to another variant embodiment, the auxiliary fuel injectors 51 to 56 or 61 to 66 and 71 to 76 each include a device to adjust or alter the jet momentum or jet impulse or jet velocity of the injected auxiliary fuel.

In alternative embodiments (not shown), the auxiliary injectors may be located in the side walls. In such embodiments, the auxiliary injectors may only be used while the corresponding port on the opposite side wall introduces oxidiser.

Embodiments of the present invention may also relate to a method of melting raw materials by a cross-fired melting furnace 10 which has:

- a melting tank 7 for receiving raw materials to be melted and for accommodating a melted materials bath;
- a melting chamber 8 located above said melting tank and comprising a first side wall, a second side wall opposite said first side wall, a back wall located at an upstream area of said melting tank, a front wall located at a downstream area of said melting tank, and a roof;
- N first ports 31, ..., 36 being provided in the first side wall in horizontally spaced locations between said back wall and front wall, each of said at least one series of N first ports 31, ... 36 being associated with a corresponding first burner of a series of N first burners 11, ..., 16;
- N second ports 41, ... 46 being located in the second side wall in horizontally spaced locations between said back wall and front wall, each of said N second ports being located opposite a first port to define N couples of first and second ports 31, 41, ... , 36, 46;

wherein re-circulating combustion products flow in a substantially vertical loop above a flame the method comprising:

introducing a first fraction X1 of fuel into said melting chamber via said first burners,

introducing a second fraction X2 of auxiliary fuel, with X2 + X1 being equal to 1, using at least one auxiliary fuel injector 51, the at least one auxiliary fuel injector being arranged in the cross-fired melting furnace in said roof or in the side wall not comprising burners introducing fuel so that the at least one auxiliary fuel injector introduces the second fraction X2 of auxiliary fuel,

in the direction of the flow of said re-circulating combustion products 104,

without additional oxidiser,

into said re-circulating combustion products , the auxiliary fuel injector being located at a point where said second fraction X2 of auxiliary fuel will mix with the recirculating combustion products, before reaching incoming oxidiser introduced by a port,

the velocities of the jets introducing the fraction X1 of fuel and the fraction X2 of auxiliary fuel being adapted so that the sum of their corresponding jet momenta is comprised between plus or minus 30% of a value corresponding to the jet momentum of the fuel when X2 equals zero (and X1 equals 1), and

the energy provided by the quantity of the sum of the first fraction of fuel X1 and the second fraction of fuel X2 being adapted to produce a given required energy for melting said materials without over-fuelling the furnace.

Generally speaking, the invention provides a simplification in the manufacturing process, increases performance and reduces cost.

Although preferred embodiments have been shown and described, it should be understood that any changes and modifications may be made therein without departing from the scope of the invention as defined in the appended claims.

## Claims

1. A method of melting raw materials by a cross-fired melting furnace (10) which has:

   - a melting tank (7) for receiving raw materials to be melted and for accommodating a melted materials bath;
   - a melting chamber (8) located above said melting tank and comprising a first side wall, a second side wall opposite said first side wall, a back wall located at an upstream area of said melting tank, a front wall located at a downstream area of said melting tank, and a roof;
   - N first ports (31, ..., 36) being provided in the first side wall in horizontally spaced locations between said back wall and front wall, each of said at least one series of N first ports (31, ... 36) being associated with a corresponding first burner of a series of N first burners (11, ..., 16);
   - N second ports (41, ... 46) being located in the second side wall in horizontally spaced locations between said back wall and front wall, each of said N second ports being located opposite a first port to define N couples of first and second ports (31, 41, ... , 36, 46);

wherein re-circulating combustion products flow in a substantially vertical loop above a flame;
the method comprising:

    introducing a first fraction X1 of fuel into said melting chamber via said first burners,
    introducing a second fraction X2 of auxiliary fuel, with X2 + X1 being equal to 1, using at least one auxiliary fuel injector (51), the at least one auxiliary fuel injector being arranged in the cross-fired melting furnace in said roof or in the side wall not comprising burners introducing fuel so that the at least one auxiliary fuel injector introduces the second fraction X2 of auxiliary fuel,

        in the direction of the flow of said re-circulating combustion products (104),
        without additional oxidiser,
        into said re-circulating combustion products, the auxiliary fuel injector being located at a point where said second fraction X2 of auxiliary fuel will mix with the re-circulating combustion products, before reaching incoming oxidiser introduced by a port,
        the velocities of the jets introducing the fraction X1 of fuel and the fraction X2 of auxiliary fuel being adapted so that the sum of their corresponding jet momenta is comprised between plus or minus 30% of a value corresponding to the jet momentum of the fuel when X2 equals zero, and
        the energy provided by the quantity of the sum of the first fraction of fuel X1 and the second fraction of fuel X2 being adapted to produce a given required energy for melting said materials without over-fuelling the furnace.

2.    The method of claim 1, wherein said at least one auxiliary fuel injector (51, ..., 56) is located in said roof at the same distance from a first port and a second port (31, 41; ...; 36, 46) opposite to the first port.

3.    The method according to claim 1, wherein each of said second series of N second ports (41 to 46) is associated with a corresponding second burner of a series of N second burners (21 to 26), and
said first ports (31 to 36) and said second ports (41 to 46) are alternately operable as an inlet port and as exhaust port, said first ports (31 to 36) being inlet port when said second ports (41 to 46) are exhaust ports and said first ports (31 to 36) being exhaust ports when said second ports (41 to 46) are inlet ports.

4.    The method according to claim 3, wherein couples of first and second auxiliary fuel injectors (61, 71;...;66, 76) are associated with each couple of oppositely arranged first and second ports (31, 41; ...; 36, 46), said first and second auxiliary fuel injectors (61, 71;...; 66, 76) being located in said roof (6) or in said first and second side walls (2, 1) respectively in the vicinity of the first and second ports of the associated couple of oppositely arranged first and second ports (31, 41; ...; 36, 46), so that said first and second auxiliary fuel injectors (61, 71;...;66, 76) are alternately operable to inject said second fraction X2 of auxiliary fuel, said first or second auxiliary fuel injectors (61, 71;...;66, 76) being operable when the corresponding first or second ports (31, 41; ...; 36, 46) located in the vicinity of said first or second auxiliary fuel injectors (61, 71;...;66, 76) are exhaust ports.

5.    The method according to any one of claims 3 or 4, wherein said first and second burners (11-16, 21-26) and said at least one auxiliary fuel injector (51-56; 61-66; 71-76) operate with the same fuel.

6.    The method according to any one of claims 3 or 4, wherein said first and second burners (11-16, 21-26) on the one hand and said at least one auxiliary fuel injectors (51-56; 61-66; 71-76) on the other hand respectively operate with different fuels.

7.    The method according to any one of claims 1 to 6, wherein said first and second burners (11-16, 21-26) on the one hand and said at least one auxiliary fuel injector (51-56; 61-66; 71-76) on the other hand respectively operate with a fuel selected from the group consisting of natural gas, LPG, fuel oil, coke-oven gas, blast furnace gas, reforming gas, biofuel, methane, and hydrogen.

8.    The method according to any one of claims 1 to 7, wherein said at least one auxiliary fuel injector (51-56; 61-66; 71-76) includes a device putting into rotation the injected auxiliary fuel to create a swirl effect.

9.    The method according to any one of claims 1 to 8, wherein said at least one auxiliary fuel injector (51-56; 61-66; 71-76) includes a device to adjust or alter the jet momentum of the injected auxiliary fuel.

10.    The method according to any one of claims 1 to 9, wherein said second fraction X2 of auxiliary fuel represents between 10 and 100% of the sum of the first and second fractions X1 and X2 of fuel.

11.    The method of any one of claims 1 to 10, comprising introducing the second fraction of auxiliary fuel X2 so as to reinforce the mass flow of re-circulating combustion products.

12.    The method of any one of claims 1 to 11, comprising adjusting or turning off some of the burners so as to reinforce the mass flow of re-circulating combustion products.

13. The method of any one of claims 1 to 12, in which the velocity of the jet for introducing the second fraction X2 of auxiliary fuel is comprised between 10 and 70 m/s.

14. The method according to claim 4, wherein the first auxiliary injectors are located at a quarter of the width of the melting chamber from the side wall which is the closest to the first auxiliary injector, and the second auxiliary injectors are located a quarter of the width of the melting chamber from the side wall which is the closest to the second auxiliary injector.

15. A cross-fired melting furnace comprising:

   - a melting tank (7) for receiving raw materials to be melted and for accommodating a melted materials bath;
   - a melting chamber (8) located above said melting tank and comprising a first side wall, a second side wall opposite said first side wall, a back wall located at an upstream area of said melting tank, a front wall located at a downstream area of said melting tank, and a roof;
   - N first ports (31, ..., 36) being provided in the first side wall in horizontally spaced locations between said back wall and front wall, each of said at least one series of N first ports (31, ... 36) being associated with a corresponding first burner of a series of N first burners (11, ..., 16) introducing a first fraction X1 of fuel into said melting chamber via said first burners, whereas re-circulating combustion products flow in a substantially vertical loop above a flame;
   - N second ports (41, ... 46) being located in the second side wall in horizontally spaced locations between said back wall and front wall, each of said N second ports being located opposite a first port to define N couples of first and second ports (31, 41, ... , 36, 46);
   - at least one auxiliary fuel injector (51) arranged in the cross-fired melting furnace in said roof or in the side wall not comprising burners introducing fuel,
   - a module for controlling the at least one auxiliary fuel injector to introduce a second fraction X2 of auxiliary fuel, with X2 + X1 being equal to 1,

      in the direction of the flow of said re-circulating combustion products (104),
      without additional oxidiser,
      into said re-circulating combustion products, the auxiliary fuel injector being located at a point where said second fraction X2 of auxiliary fuel will mix with the recirculating combustion products, before reaching incoming oxidiser introduced by a port,
the velocities of the jets introducing the fraction X1 of fuel and the fraction X2 of auxiliary fuel being adapted so that the sum of their corresponding jet momenta is comprised between plus or minus 30% of a value corresponding to the jet momentum of the fuel when X2 equals zero, and
the energy provided by the quantity of the sum of the first fraction of fuel X1 and the second fraction of fuel X2 being adapted to produce a given required energy for melting said materials without over-fuelling the furnace.

**Patentansprüche**

1. Verfahren zum Schmelzen von Rohstoffen durch einen Kreuzbrennerschmelzofen (10), der aufweist:

   - einen Schmelztank (7) zur Aufnahme von zu schmelzenden Rohstoffen und zur Aufnahme eines Materialschmelzebades,
   - eine Schmelzkammer (8), die über dem Schmelztank angeordnet ist und eine erste Seitenwand, eine zweite Seitenwand gegenüber der ersten Seitenwand, eine Rückwand, die in einem stromaufwärtigen Bereich des Schmelztanks angeordnet ist, eine Vorderwand, die in einem stromabwärtigen Bereich des Schmelztanks angeordnet ist, und ein Dach umfasst,
   - N erste Anschlüsse (31, ..., 36), die in der ersten Seitenwand an horizontal beabstandeten Stellen zwischen der Rückwand und der Vorderwand angeordnet sind, wobei jede der mindestens einen Reihe von N ersten Anschlüssen (31, ..., 36) einem entsprechenden ersten Brenner einer Reihe von N ersten Brennern (11, ..., 16) zugeordnet ist,
   - N zweite Anschlüsse (41, ..., 46), die in der zweiten Seitenwand an horizontal beabstandeten Stellen zwischen der Rückwand und der Vorderwand angeordnet sind, wobei jeder der N zweiten Anschlüsse gegenüber einem ersten Anschluss angeordnet ist, um N Paare von ersten und zweiten Anschlüssen (31, 41, ..., 36, 46) zu definieren,
   wobei rezirkulierende Verbrennungsprodukte in einem im Wesentlichen vertikalen Kreislauf über einer Flamme strömen,
   wobei das Verfahren umfasst:

      Einleiten einer ersten Fraktion X1 von Brennstoff in die Schmelzkammer über die ersten Brenner,

Einleiten einer zweiten Fraktion X2 von Hilfsbrennstoff, wobei X2 + X1 gleich 1 ist, unter Verwendung mindestens eines Hilfsbrennstoffinjektors (51), wobei der mindestens eine Hilfsbrennstoffinjektor in dem Kreuzbrennerschmelzofen in dem Dach oder in der Seitenwand angeordnet ist, die keine Brenner umfasst, die Brennstoff einleiten, so dass der mindestens eine Hilfsbrennstoffinjektor die zweite Fraktion X2 von Hilfsbrennstoff

in der Richtung des Stromes der rezirkulierenden Verbrennungsprodukte (104) ohne zusätzliches Oxidationsmittel

in die rezirkulierenden Verbrennungsprodukte einleitet, wobei sich der Hilfsbrennstoffinjektor an einer Stelle befindet, an der sich die zweite Fraktion X2 von Hilfsbrennstoff mit den rezirkulierenden Verbrennungsprodukten vermischt, bevor sie ankommendes Oxidationsmittel erreicht, das durch einen Anschluss eingeleitet wird, wobei die Geschwindigkeiten der Strahlen, die die Fraktion X1 von Brennstoff und die Fraktion X2 von Hilfsstoff einleiten, so ausgelegt sind, dass die Summe ihrer entsprechenden Strahlmomente zwischen plus oder minus 30 % eines Wertes liegt, der dem Strahlmoment des Brennstoffs entspricht, wenn X2 gleich Null ist, und wobei die Energie, die durch die Menge der Summe der ersten Fraktion von Brennstoff X1 und der zweiten Fraktion von Brennstoff X2 bereitgestellt wird, dafür ausgelegt ist, eine bestimmte erforderliche Energie für das Schmelzen der Materialien zu erzeugen, ohne den Ofen mit Brennstoff zu überfüllen.

2. Verfahren nach Anspruch 1, wobei der mindestens eine Hilfsbrennstoffinjektor (51, ..., 56) in dem Dach mit demselben Abstand zu einem ersten Anschluss und zu einem dem ersten Anschluss gegenüberliegenden zweiten Anschluss (31, 41; ...; 36, 46) angeordnet ist.

3. Verfahren nach Anspruch 1, wobei
jeder der zweiten Reihe von N zweiten Anschlüssen (41 bis 46) einem entsprechenden zweiten Brenner einer Reihe von N zweiten Brennern (21 bis 26) zugeordnet ist und
die ersten Anschlüsse (31 bis 36) und die zweiten Anschlüsse (41 bis 46) abwechselnd als Einlassanschlüsse und als Auslassanschlüsse betrieben werden können, wobei die ersten Anschlüsse (31 bis 36) Einlassanschlüsse sind, wenn die zweiten Anschlüsse (41 bis 46) Auslassanschlüsse sind und die ersten Anschlüsse (31 bis 36) Auslassanschlüsse sind, wenn die zweiten Anschlüsse (41 bis 46) Einlassanschlüsse sind.

4. Verfahren nach Anspruch 3, wobei Paare von ersten und zweiten Hilfsbrennstoffinjektoren (61, 71; ...; 66, 76) jedem Paar von gegenüber angeordneten ersten und zweiten Anschlüssen (31, 41; ...; 36, 46) zugeordnet sind, wobei die ersten und zweiten Hilfsbrennstoffinjektoren (61, 71; ...; 66, 76) in dem Dach (6) oder in den ersten und zweiten Seitenwänden (2, 1) jeweils in der Nähe der ersten und zweiten Anschlüsse des zugehörigen Paares von gegenüber angeordneten ersten und zweiten Anschlüssen (31, 41; ...; 36, 46) angeordnet sind, so dass die ersten und zweiten Hilfsbrennstoffinjektoren (61, 71; ...; 66, 76) abwechselnd betrieben werden können, um die zweite Fraktion X2 von Hilfsbrennstoff einzublasen, wobei die ersten oder zweiten Hilfsbrennstoffinjektoren (61, 71; ...; 66, 76) betrieben werden können, wenn die entsprechenden ersten oder zweiten Anschlüsse (31, 41; ...; 36, 46), die sich in der Nähe der ersten oder zweiten Hilfsbrennstoffinjektoren (61, 71; ...; 66, 76) befinden, Auslassanschlüsse sind.

5. Verfahren nach einem der Ansprüche 3 und 4, wobei die ersten und zweiten Brenner (11-16, 21-26) und der mindestens eine Hilfsbrennstoffinjektor (51-56; 61-66; 71-76) mit dem gleichen Brennstoff arbeiten.

6. Verfahren nach einem der Ansprüche 3 und 4, wobei die ersten und zweiten Brenner (11-16, 21-26) einerseits und der mindestens eine Hilfsbrennstoffinjektor (51-56; 61-66; 71-76) andererseits jeweils mit unterschiedlichen Brennstoffen arbeiten.

7. Verfahren nach einem der Ansprüche 1 bis 6, wobei die ersten und zweiten Brenner (11-16, 21-26) einerseits und der mindestens eine Hilfsbrennstoffinjektor (51-56; 61-66; 71-76) andererseits jeweils mit einem Brennstoff arbeiten, der aus der aus Erdgas, LPG, Heizöl, Koksgas, Hochofengas, Reformgas, Biobrennstoff, Methan und Wasserstoff bestehenden Gruppe ausgewählt ist.

8. Verfahren nach einem der Ansprüche 1 bis 7, wobei der mindestens eine Hilfsbrennstoffinjektor (51-56; 61-66; 71-76) eine Vorrichtung enthält, die den eingeblasenen Hilfsbrennstoff in Drehung versetzt, um einen Wirbeleffekt zu erzeugen.

9. Verfahren nach einem der Ansprüche 1 bis 8, wobei der mindestens eine Hilfsbrennstoffinjektor (51-56; 61-66; 71-76) eine Vorrichtung zum Einstellen oder Ändern des Strahlmoments des eingeblasenen Hilfsbrennstoffs enthält.

10. Verfahren nach einem der Ansprüche 1 bis 9, wobei die zweite Fraktion X2 von Hilfsbrennstoff zwischen 10 und 100 % der Summe der ersten und zweiten Fraktionen X1 und X2 von Brennstoff darstellt.

11. Verfahren nach einem der Ansprüche 1 bis 10, das das Einleiten der zweiten Fraktion von Hilfsbrennstoff X2 umfasst, um den Massenstrom von rezirkulierenden Verbrennungsprodukten zu verstärken.

12. Verfahren nach einem der Ansprüche 1 bis 11, das das Justieren oder Abschalten einiger der Brenner umfasst, um den Massenstrom von rezirkulierenden Verbrennungsprodukten zu verstärken.

13. Verfahren nach einem der Ansprüche 1 bis 12, wobei die Geschwindigkeit des Strahls zum Einleiten der zweiten Fraktion X2 von Hilfsstoff zwischen 10 und 70 m/s liegt.

14. Verfahren nach Anspruch 4, wobei die ersten Hilfsinjektoren in einem Viertel der Breite der Schmelzkammer von der Seitenwand aus angeordnet sind, die dem ersten Hilfsinjektor am nächsten liegt, und die zweiten Hilfsinjektoren in einem Viertel der Breite der Schmelzkammer von der Seitenwand aus angeordnet sind, die dem zweiten Hilfsinjektor am nächsten liegt.

15. Kreuzbrennerschmelzofen, der umfasst:

- einen Schmelztank (7) zur Aufnahme von zu schmelzenden Rohstoffen und zur Aufnahme eines Materialschmelzebades,
- eine Schmelzkammer (8), die über dem Schmelztank angeordnet ist und eine erste Seitenwand, eine zweite Seitenwand gegenüber der ersten Seitenwand, eine Rückwand, die in einem stromaufwärtigen Bereich des Schmelztanks angeordnet ist, eine Vorderwand, die in einem stromabwärtigen Bereich des Schmelztanks angeordnet ist, und ein Dach umfasst,
- N erste Anschlüsse (31, ..., 36), die in der ersten Seitenwand an horizontal beabstandeten Stellen zwischen der Rückwand und der Vorderwand angeordnet sind, wobei jede der mindestens einen Reihe von N ersten Anschlüssen (31, ..., 36) einem entsprechenden ersten Brenner einer Reihe von N ersten Brennern (11, ..., 16) zugeordnet ist, die eine erste Fraktion X1 von Brennstoff über die ersten Brenner in die Schmelzkammer einleiten, während rezirkulierende Verbrennungsprodukte in einer im Wesentlichen vertikalen Schleife über einer Flamme strömen,
- N zweite Anschlüsse (41, ..., 46), die in der zweiten Seitenwand an horizontal beabstandeten Stellen zwischen der Rückwand und der Vorderwand angeordnet sind, wobei jeder der N zweiten Anschlüsse gegenüber einem ersten Anschluss angeordnet ist, um N Paare von ersten und zweiten Anschlüssen (31, 41, ..., 36, 46) zu definieren,
- mindestens einen Hilfsbrennstoffinjektor (51), der in dem Kreuzbrennerschmelzofen in dem Dach oder in der Seitenwand angeordnet ist, die keine Brenner umfasst, die Brennstoff einleiten,
- ein Modul zum Steuern des mindestens einen Hilfsbrennstoffinjektors, um eine zweite Fraktion X2 von Hilfsbrennstoff, wobei X2 + X1 gleich 1 ist,
in der Richtung des Stromes der rezirkulierenden Verbrennungsprodukte (104)
ohne zusätzliches Oxidationsmittel
in die rezirkulierenden Verbrennungsprodukte einzuleiten, wobei sich der Hilfsbrennstoffinjektor an einer Stelle befindet, an der sich die zweite Fraktion X2 von Hilfsbrennstoff mit den rezirkulierenden Verbrennungsprodukten vermischt, bevor sie ankommendes Oxidationsmittel erreicht, das durch einen Anschluss eingeleitet wird,
wobei die Geschwindigkeiten der Strahlen, die die Fraktion X1 von Brennstoff und die Fraktion X2 von Hilfsstoff einleiten, so ausgelegt sind, dass die Summe ihrer entsprechenden Strahlmomente zwischen plus oder minus 30 % eines Wertes liegt, der dem Strahlmoment des Brennstoffs entspricht, wenn X2 gleich Null ist, und wobei die Energie, die durch die Menge der Summe der ersten Fraktion von Brennstoff X1 und der zweiten Fraktion von Brennstoff X2 bereitgestellt wird, dafür ausgelegt ist, eine bestimmte erforderliche Energie für das Schmelzen der Materialien zu erzeugen, ohne den Ofen mit Brennstoff zu überfüllen.

**Revendications**

1. Procédé pour fondre des matières premières au moyen d'un four de fusion à brûleurs transversaux (10) qui a :

- un réservoir de fusion (7) pour recevoir des matières premières devant être fondues et pour loger un bain de matériaux fondus ;
- une chambre de fusion (8) située au-dessus dudit réservoir de fusion et comprenant une première paroi latérale, une deuxième paroi latérale opposée à ladite première paroi latérale, une paroi amont située au niveau d'une zone en amont dudit réservoir de fusion, une paroi aval située au niveau d'une zone en aval dudit réservoir de fusion, et un toit ;
- N premiers orifices (31, ..., 36) disposés dans la première paroi latérale en des emplacements espacés horizontalement entre lesdites paroi amont et paroi aval, chacun parmi ladite au moins une série de N premiers orifices (31, ..., 36) étant associé à un premier brûleur correspondant parmi une série de N premiers brûleurs (11, ..., 16) ;

- N deuxièmes orifices (41, ..., 46) situés dans la deuxième paroi latérale en des emplacements espacés horizontalement entre lesdites paroi amont et paroi aval, chacun desdits N deuxièmes orifices étant situé à l'opposé d'un premier orifice pour définir N couples de premier et deuxième orifices (41, 31, ..., 36, 46) ;

dans lequel les produits de combustion en recirculation s'écoulent dans une boucle pratiquement verticale au-dessus d'une flamme ;

le procédé comprenant :

l'introduction d'une première fraction X1 de carburant dans ladite chambre de fusion via lesdits premiers brûleurs,

l'introduction d'une deuxième fraction X2 de carburant auxiliaire, avec X2 + X1 = 1, par utilisation d'au moins un injecteur de carburant auxiliaire (51), l'au moins un injecteur de carburant auxiliaire étant disposé dans le four de fusion à brûleurs transversaux dans ledit toit ou dans la paroi latérale ne comprenant pas de brûleur introduisant du carburant de façon que l'au moins un injecteur de carburant auxiliaire introduise la deuxième fraction X2 de carburant auxiliaire,

dans la direction de l'écoulement desdits produits de combustion en recirculation (104),

sans oxydant supplémentaire,

dans lesdits produits de combustion en recirculation, l'injecteur de carburant auxiliaire étant situé en un point où ladite deuxième fraction X2 de carburant auxiliaire va se mélanger avec les produits de combustion en recirculation, avant d'atteindre l'oxydant entrant introduit par un orifice,

les vitesses des jets introduisant la fraction X1 de carburant et la fraction X2 de carburant auxiliaire étant adaptées pour que la somme de leurs quantités de mouvement de jet correspondantes soit comprise entre plus et moins 30 % d'une valeur correspondant à la quantité de mouvement de jet du carburant quand X2 vaut zéro, et

l'énergie fournie par la quantité de la somme de la première fraction de carburant X1 et la deuxième fraction de carburant X2 étant adaptée pour produire une énergie requise donnée pour fondre lesdits matériaux sans suralimenter le four.

2. Procédé selon la revendication 1, dans lequel ledit au moins un injecteur de carburant auxiliaire (51, ..., 56) est situé dans ledit toit à la même distance d'un premier orifice et d'un deuxième orifice (31, 41 ; ... ; 36, 46) opposé au premier orifice.

3. Procédé selon la revendication 1, dans lequel chacun parmi ladite deuxième série de N deuxièmes orifices (41 à 46) est associé à un deuxième brûleur correspondant parmi une série de N deuxièmes brûleurs (21 à 26), et
lesdits premiers orifices (31 à 36) et lesdits deuxièmes orifices (41 à 46) peuvent fonctionner en alternance comme un orifice d'entrée et un orifice de sortie, lesdits premiers orifices (31 à 36) étant des orifices d'entrée quand lesdits deuxièmes orifices (41 à 46) sont des orifices de sortie et lesdits premiers orifices (31 à 36) étant des orifices de sortie quand lesdits deuxièmes orifices (41 à 46) sont des orifices d'entrée.

4. Procédé selon la revendication 3, dans lequel des couples de premier et deuxième injecteurs de carburant auxiliaire (61, 71 ; ... ; 66, 76) sont associés à chaque couple de premier et deuxième orifices (31, 41 ; ... ; 36, 46) disposés de façon opposée, lesdits premier et deuxième injecteurs de carburant auxiliaire (61, 71 ; ... ; 66, 76) étant situés dans ledit toit (6) ou dans lesdites première et deuxième parois latérales (2, 1) respectivement au voisinage des premier et deuxième orifices du couple associé de premier et deuxième orifices (31, 41 ; ... ; 36, 46) disposés de façon opposée, de façon que lesdits premier et deuxième injecteurs de carburant auxiliaire (61, 71 ; ... ; 66, 76) puissent fonctionner en alternance pour injecter ladite deuxième fraction X2 de carburant auxiliaire, lesdits premier ou deuxième injecteurs de carburant auxiliaire (61, 71 ; ... ; 66, 76) pouvant fonctionner quand les premier ou deuxième orifices correspondants (31, 41 ; ..., 36, 46) situés au voisinage desdits premier ou deuxième injecteurs de carburant auxiliaire (61, 71 ; ... ; 66, 76) sont des orifices d'échappement.

5. Procédé selon l'une quelconque des revendications 3 et 4, dans lequel lesdits premier et deuxième brûleurs (11-16, 21-26) et ledit au moins un injecteur de carburant auxiliaire (51-56 ; 61-66 ; 71-76) fonctionnent avec le même carburant.

6. Procédé selon l'une quelconque des revendications 3 et 4, dans lequel lesdits premier et deuxième brûleurs (11-16, 21-26) d'une part et ledit au moins un injecteur de carburant auxiliaire (51-56 ; 61-66 ; 71-76) d'autre part fonctionnent avec des carburants différents.

7. Procédé selon l'une quelconque des revendications 1 à 6, dans lequel lesdits premier et deuxième brûleurs (11-16, 21-26) d'une part et ledit au moins un injecteur de carburant auxiliaire (51-56 ; 61-66 ; 71-76) d'autre part fonctionnent respectivement avec un carburant choisi dans le groupe constitué par le gaz naturel, le GPL, le fioul, le gaz de cokerie, le gaz de haut fourneau, le gaz de reformage, le biocarburant, le méthane et l'hydrogène.

8. Procédé selon l'une quelconque des revendications 1 à 7, dans lequel ledit au moins un injecteur de carburant auxiliaire (51-56 ; 61-66 ; 71-76) contient un dispositif mettant en rotation le carburant auxiliaire injecté pour créer un effet de tourbillon.

9. Procédé selon l'une quelconque des revendications 1 à 8, dans lequel ledit au moins un injecteur de carburant auxiliaire (51-56 ; 61-66 ; 71-76) contient un dispositif pour ajuster ou modifier la quantité de mouvement de jet du carburant auxiliaire injecté.

10. Procédé selon l'une quelconque des revendications 1 à 9, dans lequel ladite deuxième fraction X2 de carburant auxiliaire représente entre 10 et 100 % de la somme des première et deuxième fractions X1 et X2 de carburant.

11. Procédé selon l'une quelconque des revendications 1 à 10, comprenant l'introduction de la deuxième fraction de carburant auxiliaire X2 de façon que le débit massique des produits de combustion en recirculation soit renforcé.

12. Procédé selon l'une quelconque des revendications 1 à 11, comprenant l'ajustement ou l'arrêt de certains des brûleurs de façon que le débit massique des produits de combustion en recirculation soit renforcé.

13. Procédé selon l'une quelconque des revendications 1 à 12, dans lequel la vitesse du jet pour introduire la deuxième fraction X2 de carburant auxiliaire est comprise entre 10 et 70 m/s.

14. Procédé selon la revendication 4, dans lequel les premiers injecteurs auxiliaires sont situés au quart de la largeur de la chambre de fusion à partir de la paroi latérale qui est la plus proche du premier injecteur auxiliaire, et les deuxièmes injecteurs auxiliaires sont situés au quart de la largeur de la chambre de fusion à partir de la paroi latérale qui est la plus proche du deuxième injecteur auxiliaire.

15. Four de fusion à brûleurs transversaux comprenant :

- un réservoir de fusion (7) pour recevoir des matières premières devant être fondues et pour loger un bain de matériaux fondus ;

- une chambre de fusion (8) située au-dessus dudit réservoir de fusion et comprenant une première paroi latérale, une deuxième paroi latérale opposée à ladite première paroi latérale, une paroi amont située au niveau d'une zone en amont dudit réservoir de fusion, une paroi aval située au niveau d'une zone en aval dudit réservoir de fusion, et un toit ;

- N premiers orifices (31, ..., 36) disposés dans la première paroi latérale en des emplacements espacés horizontalement entre lesdits paroi amont et paroi aval, chacun parmi ladite au moins une série de N premiers orifices (31, ..., 36) étant associé à un premier brûleur correspondant parmi une série de N premiers brûleurs (11, ..., 16) introduisant une première fraction X1 de carburant dans ladite chambre de fusion via lesdits premiers brûleurs, tandis que les produits de combustion en recirculation s'écoulent dans une boucle pratiquement verticale au-dessus d'une flamme ;

- N deuxièmes orifices (41, ..., 46) situés dans la deuxième paroi latérale en des emplacements espacés horizontalement entre lesdites paroi amont et paroi aval, chacun desdits N deuxièmes orifices étant situé à l'opposé d'un premier orifice pour définir N couples de premier et deuxième orifices (41, 31, 36, 46) ;

- au moins un injecteur de carburant auxiliaire (51) disposé dans le four de fusion à brûleurs transversaux dans ledit toit ou dans la paroi latérale ne comprenant pas de brûleur introduisant du carburant,

- un module pour commander ledit au moins un injecteur de carburant auxiliaire de façon qu'il introduise une deuxième fraction X2 de carburant auxiliaire, avec X2+X1 = 1,

dans la direction de l'écoulement desdits produits de combustion en recirculation (104),

sans oxydant supplémentaire,

dans lesdits produits de combustion en recirculation, l'injecteur de carburant auxiliaire étant situé en un point où ladite deuxième fraction X2 de carburant auxiliaire va se mélanger avec les produits de combustion en recirculation, avant d'atteindre l'oxydant entrant introduit par un orifice,

les vitesses des jets introduisant la fraction X1 de carburant et la fraction X2 de carburant auxiliaire étant adaptées pour que la somme de leurs quantités de mouvement de jet correspondantes soit comprise entre plus et moins 30 % d'une valeur correspondant à la quantité de mouvement de jet du carburant quand X2 vaut zéro, et l'énergie fournie par la quantité de la somme de la première fraction de carburant X1 et de la deuxième fraction de carburant X2 étant adaptée pour produire une énergie requise donnée pour fondre lesdits matériaux sans suralimenter le four.

**FIG.1**

EP 3 431 447 B1

FIG.2

EP 3 431 447 B1

**FIG.3**

**FIG.4**

**EP 3 431 447 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0882488 A, Tsai
- US 5893940 A
- EP 0599548 A, Quirk
- JP 08208240 B, Ichiraku
- US 6047565 A, Moreau
- JP 05180409 B, Nakamura
- US 4599100 A, Demarest
- WO 2008074961 A2, Ward

**Non-patent literature cited in the description**

- **CRAYA A ; CURTET R.** On the spreading of a confined jet. *Comptes-rendus de l'Academie des Sciences,* 1955, vol. 241